(19) Europäisches Patentamt
European Patent Office
Office européen des brevets

(11) EP 1 408 517 A2

(12) # EUROPEAN PATENT APPLICATION

(43) Date of publication:
**14.04.2004 Bulletin 2004/16**

(51) Int Cl.7: **H01B 1/12**

(21) Application number: **03023137.7**

(22) Date of filing: **10.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **10.10.2002 JP 2002297802**

(71) Applicants:
- **JSR Corporation**
  **Tokyo 104-0045 (JP)**
- **HONDA MOTOR CO., Ltd.**
  **Tokyo 107-8556 (JP)**

(72) Inventors:
- **Goto, Kohei, JSR Corporation**
  **Tokyo (JP)**
- **Kakuta, Mayumi, JSR Corporation**
  **Tokyo (JP)**
- **Asano, Yoichi, Honda R&D Co., Ltd.**
  **Wako-shi Saitama (JP)**

(74) Representative: **Böhm, Brigitte, Dipl.-Chem. Dr.**
**Weickmann & Weickmann**
**Patentanwälte**
**Postfach 860 820**
**81635 München (DE)**

(54) **Proton conductive composition and proton conductive membrane**

(57) A proton conductive composition comprises a heteropolyacid and a polyarylene having a sulfonic group. The composition has good water resistance and toughness, and shows an excellent proton conductivity without any treatment to increase the acid concentration in the sulfonated polyarylene. A proton conductive membrane is also provided that is derived from the composition.

EP 1 408 517 A2

## Description

### FIELD OF THE INVENTION

The present invention relates to a proton conductive composition having an improved proton conductivity, and a proton conductive membrane comprising the composition.

### BACKGROUND OF THE INVENTION

Recently, electrolytes have a high tendency to be used in the form of solid rather than the conventional form of (aqueous) solution. This is because firstly those solid electrolytes have good processability so that they can be easily applied in electric and electronic components, and secondly there are trends for reduction of weight, thickness, length and size of such components and further for power saving.

Proton conductive materials, both inorganic and organic, are known in the art. However, inorganic proton conductive materials, such as uranyl phosphate hydrates, come with many difficulties when superposed as a conductive layer onto a substrate or an electrode. For example, sufficient contact cannot be achieved in the interface between the conductive layer and a substrate or the like.

On the other hand, organic proton conductive compounds can be exemplified with such organic polymers as polymers belonging to cation exchange resins; for example sulfonated vinyl polymers such as polystyrene sulfonic acid; perfluoroalkylsulfonic acid polymers typically represented by Nafion® (Du Pont Kabushiki kaisha); perfluoroalkylcarboxylic acid polymers; and heat resistant polymers, such as polybenzimidazole and polyether ether ketone, in which sulfonic or phosphoric groups have been introduced (Polymer Preprints, Japan, Vol. 42, No. 7, p. 2490-2492 (1993), Polymer Preprints, Japan, Vol. 43, No. 3, p. 735-736 (1994), Polymer Preprints, Japan, Vol. 42, No. 3, p. 730 (1993)).

These organic polymers, which are generally in the form of film when used as electrolyte, are soluble in a solvent and are thermoplastic. These features allow them to be produced into a conductive membrane jointly on an electrode. However, many of these organic polymers are still insufficient in proton conductivity. In addition to that, they have poor service durability, reduce their proton conductivity at high temperatures (100°C or above), are embrittled by sulfonation to cause low mechanical strength, and have high moisture dependency. Moreover, the adhesion thereof with an electrode is not satisfactorily good. Further, because of the water-containing structure of these polymers, the conductive membrane is excessively swollen during operation, resulting in lowered strength and deformation. As explained above, the organic polymers too have various problems hampering their application to electric and electronic components.

U.S. Patent No. 5403675 discloses a solid polymer electrolyte comprising a sulfonated rigid-rod polyphenylene. This polymer is obtained by reacting a polymer which is prepared by polymerizing an aromatic compound comprising phenylene chains (see column 9 of the patent publication for more details on the structure) as a main component with a sulfonating agent to introduce therein sulfonic groups. Although the proton conductivity of the sulfonated polymer can be improved by increasing the amount of introduced sulfonic acid groups (acid concentration), mechanical characteristics such as toughness (e.g., elongation at break and folding durability) and resistance to hot water will be remarkably deteriorated at the same time.

In view of the above prior art, the present inventors earnestly studied in search of a way of improving the proton conductivity without increasing the acid concentration in the proton conductive membrane. Specifically, they worked on the formation of a complex using a solid acid which shows a proton conductivity. As a result, they have found that a complex comprising a heteropolyacid and a polyarylene having a sulfonic group, can exhibit an improved proton conductivity without any deterioration in water resistance or toughness.

### OBJECTS OF THE INVENTION

It is an object of the invention to provide a proton conductive composition that can show an excellent proton conductivity without any treatment to increase the acid concentration in sulfonic group-containing polyarylene and that is also excellent in water resistance and toughness. It is another object of the invention to provide a proton conductive membrane comprising the composition.

### SUMMARY OF THE INVENTION

The invention provides the following to achieve the above objects.

(1) A proton conductive composition comprising a heteropolyacid and a polyarylene having a sulfonic group.
(2) The proton conductive composition as described in (1), wherein the heteropolyacid has a proton conductivity.

(3) The proton conductive composition as described in (1) or (2), wherein the heteropolyacid is contained in an amount of 1 to 50 parts by weight based on 100 parts by weight of the polyarylene having a sulfonic group.
(4) A proton conductive membrane comprising the proton conductive composition as described in any one of (1) to (3).

## DESCRIPTION OF THE PREFERRED EMBODIMENTS

The proton conductive composition and the proton conductive membrane of the invention will be hereinafter described in detail.
The proton conductive composition comprises a heteropolyacid and a polyarylene with a sulfonic group. (Heteropolyacid)
The heteropolyacid for use in the invention preferably has a proton conductivity. Here, the proton conductive heteropolyacid refers to a compound that shows a proton conductivity as high as $10^{-1}$ to $10^{-3}$ S/cm at room temperature.
The heteropolyacid preferably has the formula:

$$H_aX_1Y_{12}O_{40}\cdot nH_2O$$

wherein X denotes P, Si, As or G, and preferably denotes P or Si; Y is W, Mo or V; and a is a value determined by the metals represented by X and Y.
Specific examples of the heteropolyacid include phosphotungstic acid, phosphomolybdic acid, phosphomolybdotungstic acid, phosphomolybdovanadic acid, phosphomolybdotungstovanadic acid, silicotungstic acid, silicomolybdic acid, silicomolybdotungstic acid, arsenomolybdic acid, and hydrates thereof. Of these heteropolyacids, 12-tungstophosphoric acid nonacosa hydrate ($H_3PW_{12}O_{40}\cdot 29H_2O$), 12-molybdophosphoric acid nonacosa hydrate ($H_3PMo_{12}O_{40}\cdot 29H_2O$) and 12-tungstosilicic acid nonacosa hydrate ($H_4SiW_{12}O_{40}\cdot 29H_2O$) are preferred.

(Polyarylene having a sulfonic group)

The polyarylene having a sulfonic group is prepared by sulfonating a polymer that results from the reaction of a monomer (A) of the following formula (A) with at least one monomer (B) selected from the following formulas (B-1) to (B-4). The polyarylene may also be obtained by the reaction between the monomer (A) and the monomer (B) that has a sulfonic or an alkylsulfonic group.

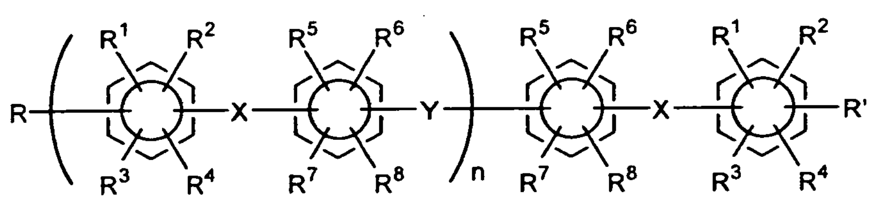
(A)

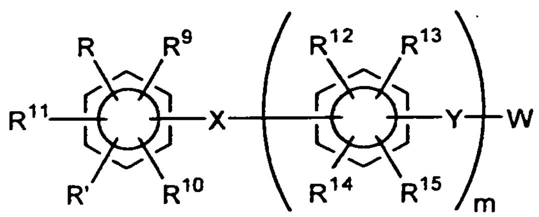
(B-1)

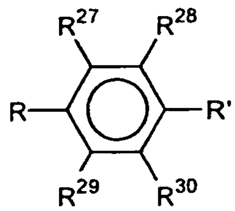

(B-2)

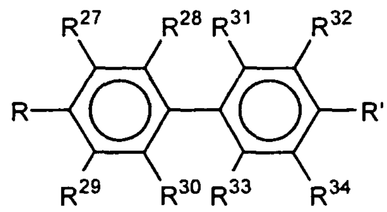

(B-3)

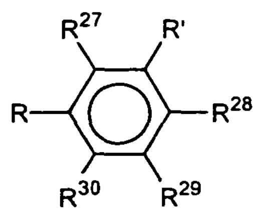

(B-4)

In the formula (A), R and R', which may be the same or different, are independently a halogen atom other than a fluorine atom or an $-OSO_2Z$ group (Z is an alkyl group, a fluorine-substituted alkyl group or an aryl group).

Exemplary groups indicated by Z include:

alkyl groups such as methyl and ethyl;
fluorine-substituted alkyl groups such as trifluoromethyl; and
aryl groups such as phenyl and p-tolyl.

$R^1$ to $R^8$, which may be the same or different, are independently at least one atom or group selected from the group consisting of a hydrogen atom, a fluorine atom, and alkyl, fluorine-substituted alkyl, allyl and aryl groups.

Examples of the alkyl groups include methyl, ethyl, propyl, butyl, amyl and hexyl. Of these, methyl, ethyl, etc. are preferred.

Examples of the fluorine-substituted alkyl groups include trifluoromethyl, perfluoroethyl, perfluoropropyl, perfluorobutyl, perfluoropentyl and perfluorohexyl. Of these, trifluoromethyl, pentafluoroethyl, etc.are preferred.

Examples of the allyl groups include propenyl.

Examples of the aryl groups include phenyl and pentafluorophenyl.

X is a divalent electron attracting group. Examples thereof include -CO-, -CONH-, $-(CF_2)_p-$ (wherein p is an integer of 1 to 10), $-C(CF_3)_2-$, -COO-, -SO-, $-SO_2-$ and the like.

The electron attracting group is defined as a group with a Hammett substituent constant of not less than 0.06 at the m-position and not less than 0.01 at the p-position of a phenyl group.

Y is a divalent electron donating group. Examples thereof include -O-, -S-, -CH=CH-, -C≡C- and groups represented by the following formulae:

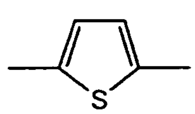

and

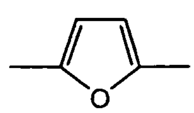

wherein n is 0 or a positive integer of up to 100, preferably up to 80.

Examples of the monomer of the formula (A) include 4,4'-dichlorobenzophenone, 4,4'-dichlorobenzanilide, bis(chlorophenyl)difluoromethane, 2,2-bis(4-chlorophenyl)hexafluoropropane, 4-chlorobenzoic acid-4-chlorophenyl, bis(4-chlorophenyl)sulfoxide, bis(4-chlorophenyl)sulfone, corresponding compounds to the above compounds except that the chlorine atom is replaced with a bromine or an iodine atom, and corresponding compounds to the above compounds except that the halogen substitution occurs at the 3-position in place of the 4-position.

Examples of the monomer of the formula (A) further include 4,4'-bis(4-chlorobenzoyl)diphenyl ether, 4,4'-bis (4-chlorobenzoylamino)diphenyl ether, 4,4'-bis(4-chlorophenylsulfonyl)diphenyl ether, 4,4'-bis(4-chlorophenyl)diphenyl ether dicarboxylate, 4,4'-bis((4-chlorophenyl)-1,1,1,3,3,3-hexafluoropropyl) diphenyl ether, 4,4'-bis((4-chlorophenyl)tetrafluoroethyl)diphenyl ether, corresponding compounds to the above compounds except that the chlorine atom is replaced with a bromine or an iodine atom, corresponding compounds to the above compounds except that the halogen substitution occurs at the 3-position in place of the 4-position, and corresponding compounds to the above compounds except that at least one of the substituent groups at the 4-position of diphenyl ether is altered to the substituent at the 3-position.

Also available as the monomer (A) are 2,2-bis(4-(4-(4-chlorobenzoyl)phenoxy)phenyl)-1,1,1,3,3,3-hexafluoropropane, bis(4-(4-(4-chlorobenzoyl) phenoxy)phenyl)sulfone, and compounds represented by the following formulae:

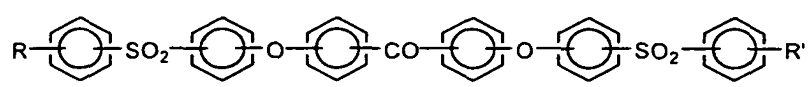

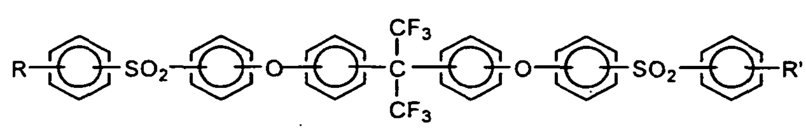

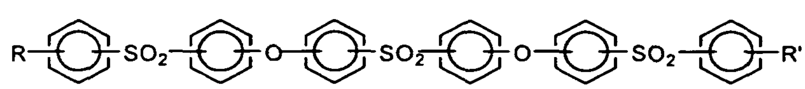

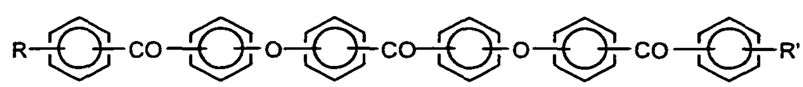

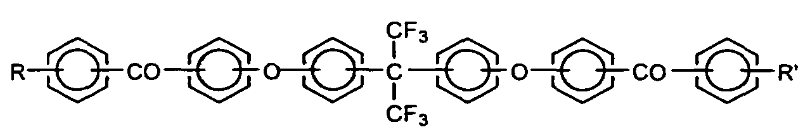

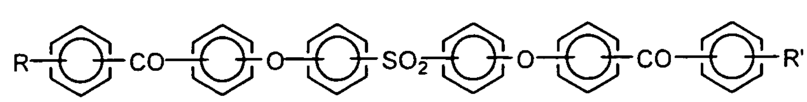

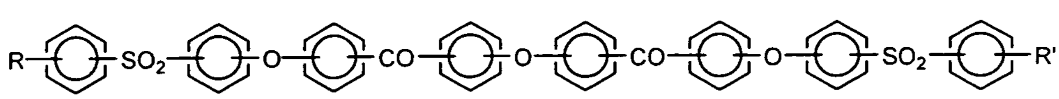

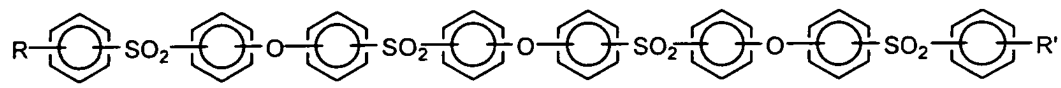

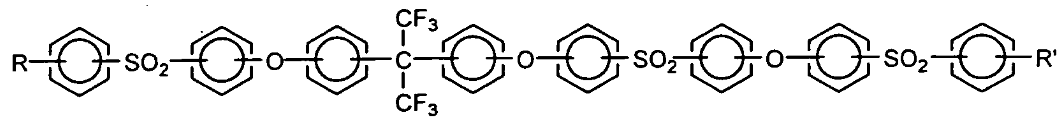

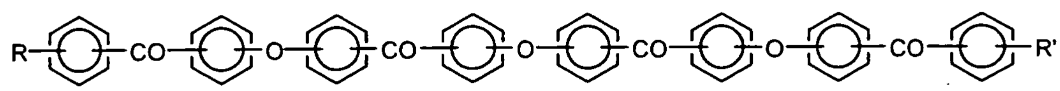

For example, the monomer (A) may be synthesized by the process given below.

First, an alkali metal such as lithium, sodium or potassium, or an alkali metal compound such as an alkali metal hydride, an alkali metal hydroxide or an alkali metal carbonate, is added to bisphenols combined together by the electron attracting group for the purpose of converting them into a corresponding alkali metal salt of bisphenol. This addition is made in a polar solvent of high dielectric constant, such as N-methyl-2-pyrrolidone, N,N-dimethylacetamide, sulfolane, diphenyl sulfone or dimethyl sulfoxide.

The alkali metal, etc. will be generally used in rather slight excess based on the hydroxyl groups of the bisphenol, for example 1.1 to 2 times equivalent amount, and preferably 1.2 to 1.5 times equivalent amount.

Thereafter, the alkali metal salt of bisphenol is reacted with a halogen-substituted, e.g. fluorine- or chlorine-substituted, aromatic dihalide compound which has been activated by the electron attracting groups, in the presence of a solvent which can form an azeotropic mixture with water, such as benzene, toluene, xylene, hexane, cyclohexane, octane, chlorobenzene, dioxane, tetrahydrofuran, anisole or phenetole. Examples of the above aromatic dihalide compound include 4,4'-difluorobenzophenone, 4,4'-dichlorobenzophenone, 4,4'-chlorofluorobenzophenone, bis(4-chlorophenyl)sulfone, bis(4-fluorophenyl)sulfone, 4-fluorophenyl-4'-chlorophenylsulfone, bis(3-nitro-4-chlorophenyl)sulfone, 2,6-dichlorobenzonitrile, 2,6-difluorobenzonitrile, hexafluorobenzene, decafluorobiphenyl, 2,5-difluorobenzophenone and 1,3-bis(4-chlorobenzoyl)benzene. From the viewpoint of reactivity, the aromatic dihalide compound is desirably a fluorine compound. But taking the subsequent aromatic coupling reaction into account, the aromatic nucleophilic substitution reaction should be designed to take place so as to yield a molecule terminated with a chlorine atom at its end(s). The active aromatic dihalide compound may be used in an amount 2 to 4 molar times, and preferably 2.2 to 2.8 molar times the amount of the bisphenol. The reaction temperature is in the range of 60 to 300°C, and preferably 80 to 250°C. The reaction time is in the range of 15 minutes to 100 hours, and preferably 1 to 24 hours. Optimally, the active aromatic dihalide compound is a chlorofluoro compound as shown in the formula hereinbelow that has two halogen atoms different in reactivity each other. The use of this compound is advantageous in that the fluorine atom will preferentially undergo the nucleophilic substitution reaction with phenoxide so that the objective chlorine-terminated active compound may be obtained.

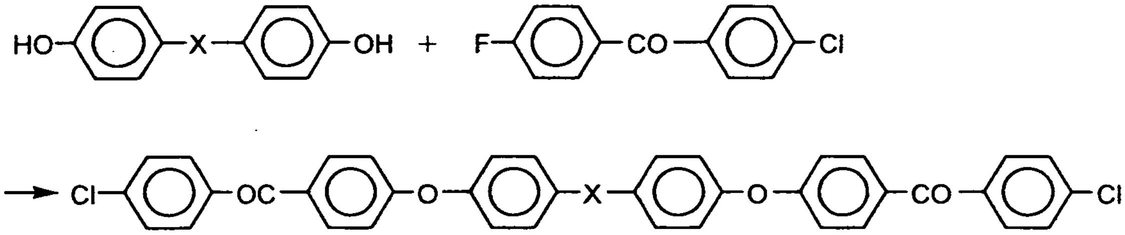

wherein X is as defined in the formula (A).

Other exemplary methods include JP-A-2(1990)/159, in which the nucleophilic substitution reaction is carried out combined with an electrophilic substitution reaction to synthesize the objective flexible compound comprising the electron attracting and electron donating groups.

Specifically, the aromatic bis-halide activated by the electron attracting group, such as bis (4-chlorophenyl) sulfone, is subjected to the nucleophilic substitution reaction with phenol; thereafter the resultant bis-phenoxy substituted compound is subjected to Friedel-Crafts reaction with, for example, 4-chlorobenzoyl chloride to obtain the objective compound. Any of the above-exemplified compounds can be used as the aromatic bis-halide activated by the electron attracting group. The phenol compound may be substituted, but is preferably unsubstituted from the viewpoints of heat resistance and flexibility. When substituted, the substituted phenol compound is preferably an alkali metal salt. Any of the alkali metal compounds listed above can be used for the substitution reaction. The alkali metal compound is used in an amount 1.2 to 2 molar times the amount of the phenol. In the reaction, the aforesaid polar solvent or the azeotropic solvent with water may be employed. To obtain the objective compound, the bis-phenoxy compound is reacted with chlorobenzoyl chloride, as an acylating agent, in the presence of an activator for the Friedel-Crafts reaction, e.g., Lewis acid such as aluminum chloride, boron trifluoride or zinc chloride. The chlorobenzoyl chloride is used in an amount 2 to 4 molar times, and preferably 2.2 to 3 molar times the amount of the bis-phenoxy compound. The Friedel-Crafts reaction activator is used in 1.1 to 2 times equivalent amount based on 1 mol of the active halide compound, such as chlorobenzoic acid used as an acylating agent. The reaction time is in the range of 15 minutes to 10 hours, and the reaction temperature is in the range of -20 to 80°C. As a solvent, chlorobenzene, nitrobenzene or the like that is inactive in the Friedel-crafts reaction may be used.

The monomer (A) in which n is 2 or more may be synthesized through the polymerization also in accordance with the_ above-mentioned method. In this case, an alkali metal salt of bisphenol, in which the bisphenol supplying ether oxygen as the electron donating group Y is combined with the electron attracting group X of >C=O, $-SO_2-$ and/or $>C(CF_3)_2$, for example 2,2-bis(4-hydroxyphenyl)-1,1,1,3,3,3-hexafluoropropane, 2,2-bis(4-hydroxyphenyl)ketone or 2,2-bis(4-hydroxyphenyl) sulfone, is subjected to a substitution reaction with an excess of the activated aromatic halogen compound such as 4,4-dichlorobenzophenone or bis(4-chlorophenyl)sulfone, in the presence of a polar solvent such as N-methyl-2-pyrrolidone, N,N-dimethylacetamide or sulfolane.

Examples of such monomers (A) include compounds represented by the following formulae:

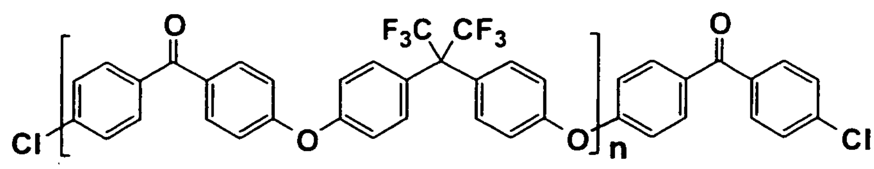

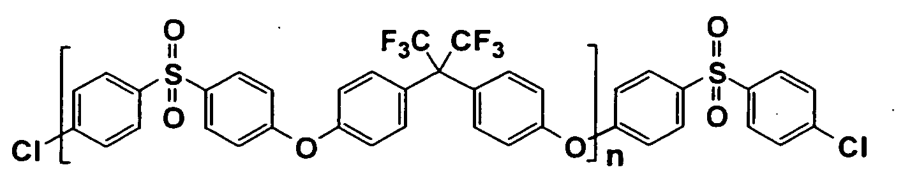

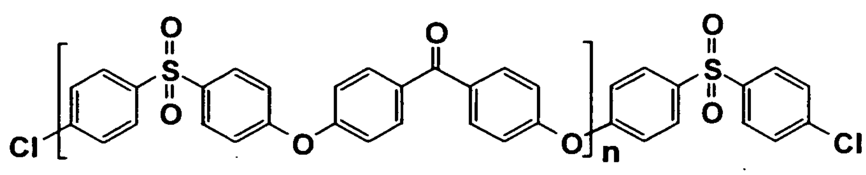

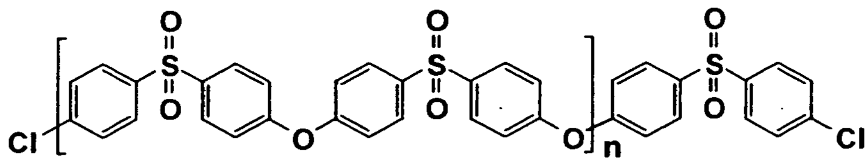

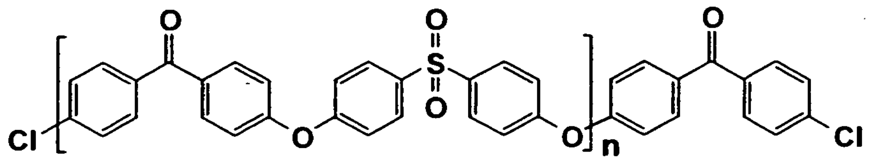

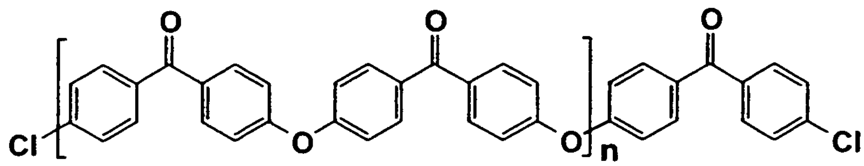

In the above formulae, n is not less than 2, preferably from 2 to 100, and more preferably from 10 to 30.

Next, the monomers represented by the formulae (B-1) to (B-4) will be described.

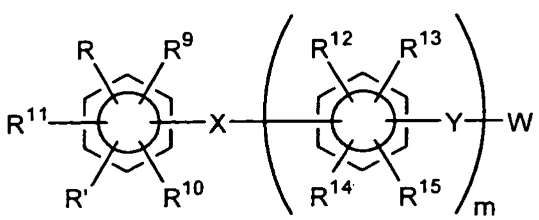
(B-1)

In the above formula, R and R', which may be the same or different, denote the same groups as defined in the formula (A).

$R^9$ to $R^{15}$, which may be the same or different, are independently at least one atom or group selected from a hydrogen atom, a fluorine atom, an alkyl group, a sulfonic group and an alkylsulfonic group.

Examples of the alkyl group, inclusive of that in the alkylsulfonic group, indicated by $R^9$ to $R^{15}$ include the same alkyl groups as indicated by $R^1$ to $R^8$ in the formula (A).

m is 0, 1 or 2.

X is a divalent electron attracting group selected from the same groups as defined with respect to X in the formula (A).

Y is a divalent electron donating group selected from the same groups as defined with respect to Y in the formula (A).

W is at least one group selected from the group consisting of a phenyl group, a naphthyl group and groups represented by the following formulae (C-1) to (C-3):

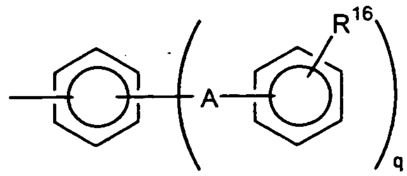

(C-1)

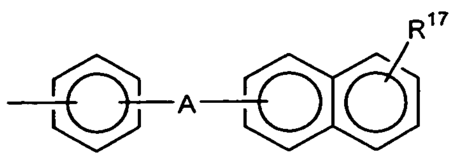

(C-2)

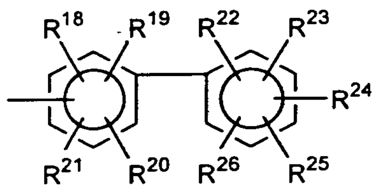

(C-3)

In the above formulae, A denotes an electron donating group or a single bond. The electron donating group is a divalent electron donating group selected from the same groups as defined with respect to Y in the formula (A).

$R^{16}$ and $R^{17}$ are independently an atom or a group selected from a hydrogen atom, an alkyl group and an aryl group. Examples of the alkyl and aryl groups designated by $R^{16}$ and $R^{17}$ include the same alkyl and aryl groups as indicated by $R^1$ to $R^8$ in the formula (A).

$R^{18}$ to $R^{26}$, which may be the same or different, are independently at least one atom or group selected from a hydrogen atom, a fluorine atom and an alkyl group. Examples of the alkyl groups designated by $R^{18}$ to $R^{26}$ include the same alkyl groups as indicated by $R^1$ to $R^8$ in the formula (A).

q is 0 or 1.

Exemplary monomers represented by the formula (B-1) include compounds with the following formulae:

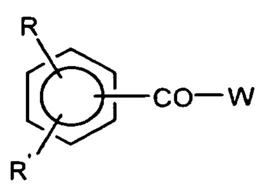

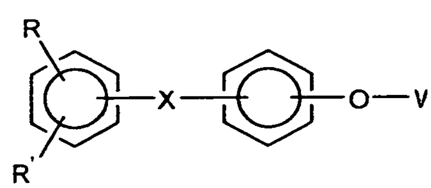

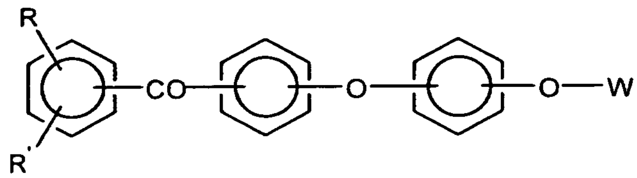

More specifically, the compounds of the formula (B-1) can be exemplified with the following compounds:

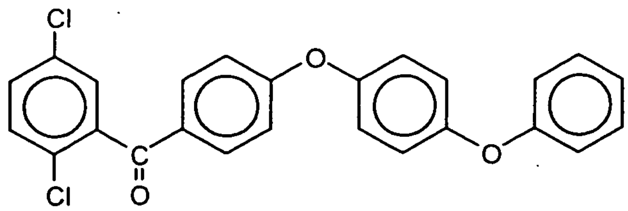

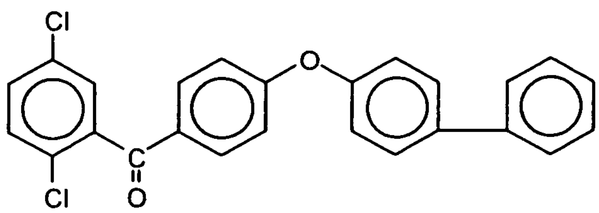

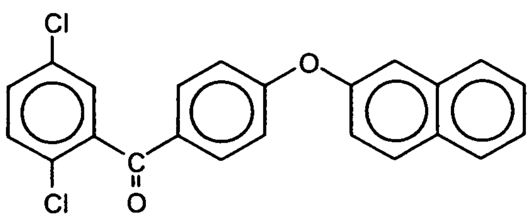

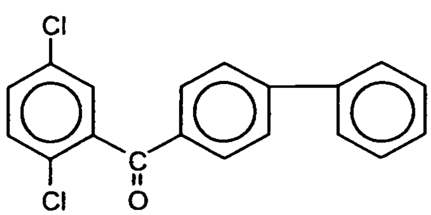

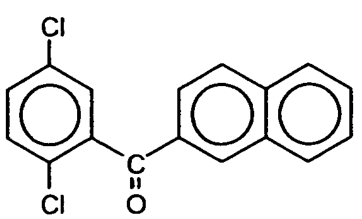

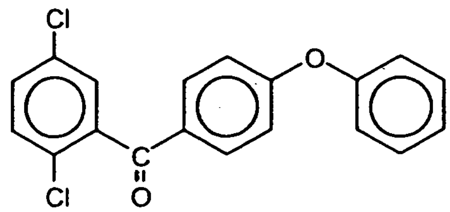

Further, corresponding compounds to the above compounds except that the chlorine atom is replaced with a bromine or an iodine atom are also available.

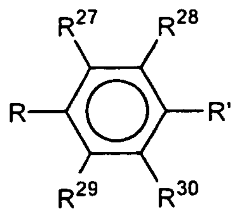

(B-2)

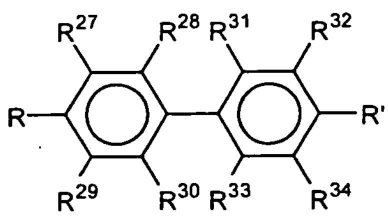

(B-3)

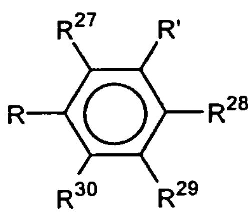

(B-4)

In the formulae (B-2) to (B-4), R and R' may be the same or different and denote the same groups as defined in the formula (A).

$R^{27}$ to $R^{34}$, which may be the same or different, are independently a hydrogen atom, a fluorine atom, an alkyl group, a fluorine-substituted alkyl group, an aryl group, a sulfonic group, an alkylsulfonic group or a group represented by the following formula (D):

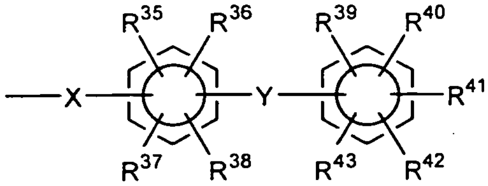

(D)

wherein $R^{35}$ to $R^{43}$, which may be the same or different, are independently a hydrogen atom, a halogen atom, an alkyl group, a fluorine-substituted alkyl group, a sulfonic group or an alkylsulfonic group.

Examples of the alkyl and fluorine-substituted alkyl groups designated by $R^{27}$ to $R^{34}$ and $R^{35}$ to $R^{43}$ include the same alkyl and fluorine-substituted alkyl groups as indicated by $R^1$ to $R^8$ in the formula (A). Examples of the aryl groups designated by $R^{27}$ to $R^{34}$ include the same aryl groups as indicated by $R^1$ to $R^8$ in the formula (A). Examples of the alkyl group in the alkylsulfonic group designated by $R^{27}$ to $R^{34}$ and $R^{35}$ to $R^{43}$ include the same alkyl groups as indicated by $R^1$ to $R^8$ in the formula (A).

X is a divalent electron attracting group selected from the same groups as defined with respect to X in the formula (A) .

Y is a divalent electron donating group selected from the same groups as defined with respect to Y in the formula (A).

Examples of the monomers represented by the formula (B-2) include p-dichlorobenzene, p-dimethylsulfonyloxybenzene, 2,5-dichlorotoluene, 2,5-dimethylsulfonyloxybenzene, 2,5-dichloro-p-xylene, 2,5-dichlorobenzotrifluoride, 1,4-dichloro-2,3,5,6-tetrafluorobenzene, and corresponding compounds to the above compounds except that the chlorine atom is replaced with a bromine or an iodine atom.

Examples of the monomers represented by the formula (B-3) include 4,4'-dimethylsulfonyloxybiphenyl, 4,4'-dimethylsulfonyloxy-3,3'-dipropenylbiphenyl, 4,4'-dibromobiphenyl, 4,4'-diiodobiphenyl, 4,4'-dimethylsulfonyloxy-3,3'-dimethylbiphenyl, 4,4'-dimethylsulfonyloxy-3,3'-difluorobiphenyl, 4,4'-dimethylsulfonyloxy-3,3',5,5'-tetrafluorobiphenyl, 4,4'-dibromooctafluorobiphenyl and 4,4'-dimethylsulfonyloxyoctafluorobiphenyl.

Examples of the monomers represented by the formula (B-4) include m-dichlorobenzene, m-dimethylsulfonyloxybenzene, 2,4-dichlorotoluene, 3,5-dichlorotoluene, 2,6-dichlorotoluene, 3,5-dimethylsulfonyloxytoluene, 2,6-dimethylsulfonyloxytoluene, 2,4-dichlorobenzotrifluoride, 3,5-dichlorobenzotrifluoride, 1,3-dibromo-2,4,5,6-tetrafluorobenzene, and corresponding compounds to the above compounds except that the chlorine atom is replaced with a bromine or an iodine atom.

To synthesize the polyarylene, the monomers mentioned above are reacted in the presence of a catalyst. The catalyst used herein is a catalyst system containing a transition metal compound. This catalyst system essentially contains (1) a transition metal salt and a compound which functions as a ligand (referred to as the "ligand component" hereinafter), or a transition metal complex (including a copper salt) to which a ligand(s) has been coordinated, and (2) a reducing agent. A "salt" may be added to increase the polymerization rate.

Examples of the transition metal salt include nickel compounds such as nickel chloride, nickel bromide, nickel iodide and nickel acetylacetonate; palladium compounds such as palladium chloride, palladium bromide and palladium iodide; iron compounds such as iron chloride, iron bromide and iron iodide; and cobalt compounds such as cobalt chloride, cobalt bromide and cobalt iodide. Of these, nickel chloride, nickel bromide, etc. are particularly preferred.

Examples of the ligand component include triphenylphosphine, 2,2'-bipyridine, 1,5-cyclooctadiene and 1,3-bis (diphenylphosphino)propane. Of these, triphenylphosphine and 2,2'-bipyridine are preferred. The ligand components may be used singly or in combination of two or more kinds.

Examples of the transition metal complex with coordinated ligands include nickel chloride-bis(triphenylphosphine), nickel bromide-bis(triphenylphosphine), nickel iodide-bis(triphenylphosphine), nickel nitrate-bis(triphenylphosphine), nickel chloride(2,2'-bipyridine), nickel bromide(2,2'-bipyridine), nickel iodide(2,2'-bipyridine), nickel nitrate(2,2'-bipyridine), bis(1,5-cyclooctadiene)nickel, tetrakis(triphenylphosphine)nickel, tetrakis(triphenylphosphite)nickel and tetrakis(triphenylphosphine)palladium. Of these, nickel chloride-bis(triphenylphosphine) and nickel chloride(2,2'-bipyridine) are preferred.

Examples of the reducing agent employable in the aforesaid catalyst system include iron, zinc, manganese, aluminum, magnesium, sodium, calcium and the like. Of these, zinc, magnesium and manganese are preferable. These reducing agents may be used in a more activated form brought about by contact with an acid, e.g., an organic acid.

Examples of the "salt" employable in the catalyst system include sodium compounds such as sodium fluoride, sodium chloride, sodium bromide, sodium iodide and sodium sulfate; potassium compounds such as potassium fluoride, potassium chloride, potassium bromide, potassium iodide and potassium sulfate; and ammonium compounds such as tetraethylammonium fluoride, tetraethylammonium chloride, tetraethylammonium bromide, tetraethylammonium iodide and tetraethylammonium sulfate. Of these, sodium bromide, sodium iodide, potassium bromide, tetraethylammonium bromide and tetraethylammonium iodide are preferred.

In respect of the proportion of the above components, the transition metal salt or the transition metal complex is used usually in an amount of 0.0001 to 10 mol, and preferably 0.01 to 0.5 mol, based on 1 mol of the total monomers. If the amount is less than 0.0001 mol, the polymerization may not proceed sufficiently. Contrary, the amount exceeding 10 mol may result in a lowered molecular weight of the polyarylene.

When the catalyst system contains the transition metal salt and the ligand component, the ligand component is used usually in an amount of 0.1 to 100 mol, and preferably 1 to 10 mol, based on 1 mol of the transition metal salt. If the amount is less than 0.1 mol, the catalytic activity may become insufficient. Contrary, the amount exceeding 100

mol may result in a lowered molecular weight of the polyarylene.

The amount of the reducing agent is usually in the range of 0.1 to 100 mol, and preferably 1 to 10 mol, based on 1 mol of the total monomers. If the reducing agent is used in an amount less than 0.1 mol, the polymerization may not proceed sufficiently. Contrary, the amount thereof exceeding 100 mol may make the purification of the resulting polymer more difficult.

When the "salt" is used, the amount thereof is usually 0.001 to 100 mol, and preferably 0.01 to 1 mol, based on 1 mol of the total monomers. If the salt is used in an amount less than 0.001 mol, the effect of increasing the polymerization rate often cannot be obtained sufficiently. Contrary, the amount thereof exceeding 100 mol may result in difficult purification of the resulting polymer.

Exemplary solvents usable in the above polymerization include tetrahydrofuran, cyclohexanone, dimethyl sulfoxide, N,N-dimethylformamide, N,N-dimethylacetamide, N-methyl-2-pyrrolidone, γ-butyrolactone and γ-butyrolactam. Of these, tetrahydrofuran, N,N-dimethylformamide, N,N-dimethylacetamide and N-methyl-2-pyrrolidone are preferred. These polymerization solvents are desirably used after dried sufficiently.

The concentration of the total monomers in the polymerization solvent is usually in the range of 1 to 90 wt%, and preferably 5 to 40 wt%.

The polymerization temperature is usually 0 to 200°C, and preferably 50 to 120°C. The polymerization time is usually 0.5 to 100 hours, and preferably 1 to 40 hours.

By the polymerization of the monomer (A) of the formula (A) with at least one monomer (B) selected from the monomers of the formulae (B-1) to (B-4) as described above, a polymerization solution containing the polyarylene is obtained.

The above-obtained polyarylene, which has no sulfonic groups, is then treated with a sulfonating agent by the conventional technique. As a result, a sulfonic group is introduced into the polyarylene. The polyarylene having a sulfonic group may be thus obtained.

Where the polyarylene has been produced with use of the compound selected from the monomers (B-1) to (B-4) in which at least one group of from $R^9$ to $R^{15}$ or from $R^{27}$ to $R^{34}$ is a sulfonic or an alkylsulfonic group, the above sulfonation may be omitted since the polyarylene will already have a sulfonic group.

For introduction of a sulfonic group, the polyarylene having no sulfonic groups may be treated with a conventional sulfonating agent, such as sulfuric anhydride, fuming sulfuric acid, chlorosulfonic acid, sulfuric acid or sodium bisulfite, under known conditions (see Polymer Preprints, Japan, vol. 42, No. 3, p. 730 (1993), Polymer Preprints, Japan, vol. 42, No. 3, p. 736 (1994), Polymer Preprints, Japan, vol. 42, No. 7, pp. 2490-2492 (1993)).

That is, the sulfonation will be carried out under such conditions as the polyarylene having no sulfonic groups is reacted with the sulfonating agent in the presence or absence of a solvent. Examples of the solvent include hydrocarbon solvents such as n-hexane; ether-type solvents such as tetrahydrofuran and dioxane; aprotic polar solvents such as dimethylacetamide, dimethylformamide and dimethyl sulfoxide; and halogenated hydrocarbons such as tetrachloroethane, dichloroethane, chloroform and methylene chloride. Although the reaction temperature is not specifically limited, it is usually in the range of -50 to 200°C, and preferably -10 to 100°C. The reaction time is usually 0.5 to 1,000 hours, and preferably 1 to 200 hours.

In the invention, the polyarylene will contain a sulfonic group in an amount of 0.5 to 3 mg equivalent/g, and preferably 0.8 to 2.8 mg equivalent/g. These quantitative ranges apply to both the polyarylene obtained by the above sulfonation and the polyarylene produced with use of the compound selected from the monomers (B-1) to (B-4) in which at least one group of from $R^9$ to $R^{15}$ or from $R^{27}$ to $R^{34}$ is a sulfonic or an alkylsulfonic group. If the sulfonic group content is less than 0.5 mg equivalent/g, the proton conductivity may not be increased. Contrary, when it exceeds 3 mg equivalent/g, hydrophilicity is so increased that the resulting polymer becomes water soluble or, if not water soluble, less durable.

The sulfonic group content may be readily controlled by altering the proportion between the monomers (A) and (B) or changing the type or combination of the monomers.

The precursor polymer of the sulfonated polyarylene (i.e., polyarylene prior to the sulfonation) has a weight-average molecular weight of 10,000 to 1,000,000, and preferably 20,000 to 800,000, in terms of polystyrene.

(Composition)

The proton conductive composition of the invention comprises the aforesaid heteropolyacid and sulfonated polyarylene.

The proton conductive composition contains the heteropolyacid in an amount of 1 to 50 parts, preferably 1 to 40 parts, and more preferably 1 to 30 parts by weight based on 100 parts by weight of the sulfonated polyarylene.

The proton conductivity will not be substantially improved either when the amount of the heteropolyacid is less than 1 part by weight or when it exceeds 50 parts by weight based on 100 parts by weight of the sulfonated polyarylene. The heteropolyacid in an amount less than 1 part by weight cannot reach a sufficient level which effectively

leads to an enhancement of water retention for increasing the proton conductivity. The amount thereof over 50 parts by weight will be sufficient to ensure good water retention, but at the same time the proton conductivity tends to be lowered with quantitative increase; this is because the complex membrane will have a higher proton nonconductive component content as the heteropolyacid increases its proportion in the membrane.

The proton conductive composition may be prepared by mixing the heteropolyacid with the sulfonated polyarylene by the conventional manner; for example by use of a high-shear mixer such as a homogenizer, a disperser, a paint conditioner (a paint mixing and conditioning machine) or a ball mill. A solvent may be optionally used in the mixing.

(Proton conductive membrane)

The proton conductive membrane of the invention comprises the above proton conductive composition.

In addition to the heteropolyacid and the sulfonated polyarylene, the proton conductive membrane may optionally contain an inorganic acid such as sulfuric acid or phosphoric acid; an organic acid containing carboxylic acid; or an appropriate amount of water.

Exemplary methods of preparing the proton conductive membrane include a melt forming process, or a casting method in which the proton conductive composition is dissolved in a solvent and the resultant solution is flow-cast in the form of film.

In the casting method, the proton conductive composition is dissolved in a solvent to give a solution and the solution is cast on a substrate to form a film.

The substrate may be any substrate used in the conventional solution casting processes. Examples include, although not particularly limited to, plastic substrates and metal substrates. Preferably, the substrate is a thermoplastic resin substrate, such as a polyethylene terephthalate (PET) film.

In producing the proton conductive membrane, the proton conductive composition may be processed together with an inorganic acid such as sulfuric acid or phosphoric acid; an organic acid containing carboxylic acid; or an appropriate amount of water.

Solvents usable to dissolve the proton conductive composition include aprotic polar solvents such as N-methyl-2-pyrrolidone, N,N-dimethylformamide, γ-butyrolactone, N,N-dimethylacetamide, dimethyl sulfoxide and dimethylurea. In terms of solvent properties and solution viscosity, N-methyl-2-pyrrolidone (hereinafter "NMP") is preferred. The aprotic polar solvents may be used singly or in combination of two or more kinds.

The solvent for dissolving the proton conductive composition may be a mixed solvent of the above aprotic polar solvent and an alcohol. Exemplary alcohols include methanol, ethanol, propyl alcohol, isopropyl alcohol, sec-butyl alcohol and tert-butyl alcohol. In particular, methanol is preferable since the resultant solution can have an appropriately low viscosity in a wide range of proportions of the composition. These alcohols may be used either singly or in combination of two or more kinds.

The above mixed solvent will contain the aprotic polar solvent in an amount of 95 to 25 wt%, and preferably 75 to 25 wt%, and the alcohol in an amount of 5 to 75 wt%, and preferably 25 to 75 wt% (the total of these two is 100 wt%). This proportion of the alcohol leads to an appropriately low solution viscosity.

Although the concentration of the proton conductive composition in the solution (i.e. polymer concentration) depends on the molecular weight of the sulfonated polyarylene, it is generally between 5 and 40 wt%, and preferably 7 and 25 wt%. The polymer concentration less than 5 wt% causes difficulties in producing the membrane in large thickness and causes easy occurrence of pinholes. Whereas when the polymer concentration goes over 40 wt%, the solution viscosity becomes so high that the production of membrane from the solution will be difficult and further that the obtained film may have poor surface smoothness.

The solution viscosity may vary depending on the molecular weight of the sulfonated polyarylene or the polymer concentration. Generally, it is between 2,000 and 100,000 mPa·s, and preferably 3,000 and 50,000 mPa·s. The viscosity of less than 2, 000 mPa·s is too low; in such a case the solution may spill out of the substrate during the membrane production. Whereas the solution viscosity over 100, 000 mPa·s is too high; in such a case the solution cannot be extruded through a die and the casting for the film production may be difficult.

The proton conductive membrane of the invention can be used as electrolytes for primary and secondary batteries, solid polymer electrolytes for fuel cells and other proton conductive membranes for display elements, sensors, signaling media, solid condensers and ion exchange membranes.

The proton conductive membrane ranges in thickness from 10 to 100μm, and preferably from 20 to 80μm.

**EXAMPLES**

The present invention will be hereinafter described in detail by the following Examples, but it should be construed that the invention is in no way limited to those Examples. (Measurement of proton conductivity)

A 5 mm-wide strip specimen of the membrane, holding 5 platinum wires (diameter: 0.5 mm) on its surface, was placed inathermo-hygrostat. Then the alternating current impedance between the platinum wires was measured at 85°C and 10 kHz under a different relative humidity of 40%, 50%, 70% or 90%.
The above measurement of the alternating current resistance was carried out using a chemical impedance measuring system (NF Corporation) and a thermo-hygrostat JW241 (Yamato Science Co., Ltd.).
The alternating current resistance was measured in each case where the interelectrode distance was changed from 5 mm to 20 mm among the 5 platinum wires.
The resistivity of the membrane was calculated by the following formula from a gradient between the interelectrode distance and the resistance. The reciprocal number of resistivity was obtained as the alternating current impedance.

$$\text{Resistivity R } (\Omega\cdot\text{cm}) = 0.5 \text{ (cm)} \times \text{membrane thickness (cm)}$$

$$\times \text{ resistance/interelectrode distance gradient } (\Omega/\text{cm})$$

(Tensile strength properties)

The sulfonated polymer was made into a membrane. The membrane was used to prepare a strip specimen, which had a size of 3mm × 65mm and a thickness of 50μm. The specimen was tested for modules of elasticity, breaking strength and strain by use of a tensile tester.

(Oxidation resistance)

The sulfonated polymer was made into a membrane. The membrane was used to prepare a strip specimen, which had a size of 3mm × 65mm and a thickness of 50μm. The specimen was soaked in a 3% hydrogen peroxide solution containing 20 ppm $Fe^{2+}$ for 20 hours at a solution temperature of 45°C. The weight change caused by the above soaking was measured.

$$\text{Weight retention} = (\text{specimen weight after soaking}$$

$$/\text{specimen weight before soaking}) \times 100$$

Example 1

60 g of a sulfonated polymer (sulfonic acid concentration (hereinafter "IEC") = 2.10 meq/g; polyarylene having a sulfonic group) of a copolymer (Ar) ( Mn = 50, 000, Mw = 150,000) was introduced into a 1000 ml plastic bottle. The copolymer (Ar) comprised 2,5-dichloro-4'-(4-phenoxy) phenoxybenzophenone (hereinafter "2,5-DCPPB") and a condensate of 4,4'-dichlorobenzophenone and 2,2-bis(4-hydroxyphenyl)-1,1,1,3,3,3-hexafluoropropane (hereinafter "oligo-BCPAF"), in 97:3 molar ratio. The condensate had both ends terminated with a chlorobenzoyl group and had Mn of 11,200 and Mw of 27,500.
Then, the sulfonated polymer was dissolved by addition of N-methyl-2-pyrrolidone 340g into the bottle. Thereafter, 12-tungstophosphoric acid n-hydrate was added in an amount 6g (10 wt%). Alumina balls 900g were further added, and the contents were stirred with a paint conditioner for 20 minutes. The uniformly dispersed solution thus obtained was filtered through a 200-mesh wire filter to remove the alumina balls. Thus, a solution of a complex of the heteropolyacid and the sulfonated polymer was obtained.
The solution was applied over a PET (polyethylene terephthalate) film by use of a coater and a doctor blade. The solution was predried at 80°C for 30 minutes to form a membrane. The membrane was stripped off from the PET film and further dried at 150°C for 1 hour with its outer frame fixed. Thus, a proton conductive membrane comprising a complex of the heteropolyacid and the sulfonated polymer was obtained in a thickness of 40μm.
The proton conductivity and the other properties were measured for this complex membrane. The results are shown in Table 1.

Example 2

A membrane was produced in the same manner as in Example 1 except that the heteropolyacid was used in an amount of 3g (5 wt%). The proton conductivity and the other properties were measured for the membrane. The

results are shown in Table 1.

Example 3

A membrane was produced in the same manner as in Example 1 except that the heteropolyacid was used in an amount of 18g (30 wt%). The proton conductivity and the other properties were measured for the membrane. The results are shown in Table 1.

Example 4

A membrane was produced in the same manner as in Example 1 except that the heteropolyacid was used in an amount of 30g (50 wt%). The proton conductivity and the other properties were measured for the membrane. The results are shown in Table 1.

Comparative Example 1

60 g of the sulfonated polymer (IEC = 2.10 meq/g) of a copolymer (Ar) (Mn = 50, 000, Mw = 150, 000) comprising 2,5-DCPPB and oligo-BCPAF in 97:3 molar ratio as used in Example 1 was introduced into a 100 ml plastic bottle.
Then, the sulfonated polymer was dissolved by addition of NMP 34g to give a polymer solution.
The polymer solution was used to produce a proton conductive membrane of the sulfonated polymer in the same manner as in Example 1. The proton conductivity and the other properties were measured for the membrane. The results are shown in Table 1.

Table 1

| | | Ex. 1 | Ex. 2 | Ex. 3 | Ex. 4 | Comp. Ex. 1 |
|---|---|---|---|---|---|---|
| Sulfonated polymer(polyarylene having a sulfonic group) (g) | | 60 | 60 | 60 | 60 | 60 |
| Heteropolyacid (g) | | 6 | 3 | 18 | 30 | 0 |
| Proton conductivity (S/cm) | 90 %RH | 0.2410 | 0.2227 | 0.2551 | 0.3021 | 0.1988 |
| | 70 %RH | 0.1054 | 0.0838 | 0.1106 | 0.1161 | 0.0754 |
| | 50 %RH | 0.0311 | 0.0236 | 0.0386 | 0.0484 | 0.0193 |
| | 40 %RH | 0.0141 | 0.0100 | 0.0200 | 0.0291 | 0.0076 |
| Tensile test results | Modules of elasticity (GPa) | 2.7 | 2.5 | - | - | 2.5 |
| | Breaking strength (MPa) | 85 | 88 | - | - | 92 |
| | Strain (%) | 65 | 65 | 60 | 55 | 70 |
| Oxidation resistance | Weight retention (%) after (45°C×20Hr) soaking in 3% $H_2O_2$ + 20 ppm $Fe^{2+}$ | 89 | 91 | 78 | 51 | 98 |

## EFFECT OF THE INVENTION

The invention provides a proton conductive composition that can show a high proton conductivity without any treatment to increase the acid concentration in a sulfonic group-containing polyarylene. The proton conductive membrane derived from the composition has excellent water resistance and toughness.

A proton conductive composition comprises a heteropolyacid and a polyarylene having a sulfonic group. The composition has good water resistance and toughness, and shows an excellent proton conductivity without any treatment to increase the acid concentration in the sulfonated polyarylene. A proton conductive membrane is also provided that is derived from the composition.

## Claims

**1.** A proton conductive composition comprising a heteropolyacid and a polyarylene having a sulfonic group.

**2.** The proton conductive composition as claimed in claim 1, wherein the heteropolyacid has a proton conductivity.

**3.** The proton conductive composition as claimed in claim 1 or 2, wherein the heteropolyacid is contained in an amount of 1 to 50 parts by weight based on 100 parts by weight of the polyarylene having a sulfonic group.

**4.** A proton conductive membrane comprising the proton conductive composition of any one of claims 1 to 3.